# EUROPEAN PATENT APPLICATION

(11) **EP 0 736 252 A2**
(43) Date of publication of application: **09.10.1996**
(21) Application number: 96810173.3
(22) Date of filing: 19.03.1996
(51) Int. Cl.: A01N 47/30

(54) **Synergistic compositions with diafenthiuron**

(30) Priority: 05.04.1995 CH 972/95
(71) Applicant: CIBA-GEIGY AG, 4002 Basel (CH)
(72) Inventor: Buholzer, Hubert, Dr., 4153 Reinach (CH); Frischknecht, Max Ludwig, Dr.,, 5466 Kaiserstuhl (CH); Kaeding, Dieter, Dr., 4434 Hölstein (CH); Senn, Robert, 4058 Basle (CH)

(57) **Abstract**

There are described a pesticidal composition which comprises a pesticidally-synergistically active combination, in various proportions, of the active ingredient of the formula 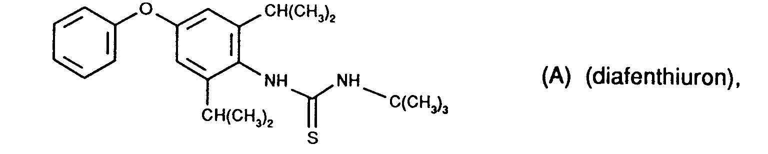
in free form or in the form of an agrochemically acceptable salt,
and one or more pesticidally active compound(s) (I) to (LXIX) as described in claim 1,
a method of controlling pests, a process for the preparation of the composition, its use, and plant propagation material treated therewith, and the use of the compound of the formula (A) for the preparation of the composition.

## Description

The present invention relates to a synergistic composition which comprises a pesticidal combination of active ingredients, to a method of controlling pests, to a process for the preparation of the composition, to its use, to plant propagation material treated with it, and to the use of a compound of the formula (A) below for preparing the composition.

Certain mixtures of active ingredients are proposed in the literature for controlling pests. However, the biological properties of these mixtures of known compounds are not entirely satisfactory in the field of pest control, which is why there is a demand for providing further mixtures having synergistic pesticidal properties, in particular for controlling insects and representatives of the order Acarina. This object is achieved according to the invention by providing the present composition.

The invention relates to a pesticidal composition which comprises a pesticidally-synergistically active combination, in variable proportions, of the pesticidally active compound of the formula

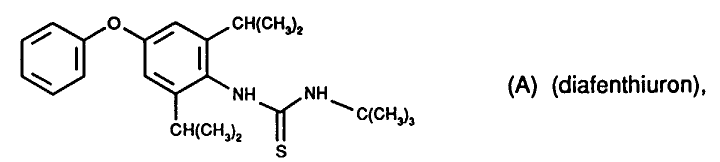

in free form or in the form of an agrochemically acceptable salt, and one or more pesticidally active compound(s) selected from the group of pesticides consisting of
(I) ethyl 2-(4-phenoxyphenoxy)ethylcarbamate (fenoxycarb), known from The Pesticide Manual, 9^{th}Ed. (1991), The British Crop Protection Council, London, page 375;
(11) 2-methyl-2-(methylthio)propionaldehyde O-methylcarbamoyloxime (aldicarb), known from The Pesticide Manual, 9^{th} Ed. (1991), The British Crop Protection Council, London, page 16;
(III) S-6-chloro-2,3-dihydro-2-oxo-1,3-oxazolo[4,5-b]pyridin-3-ylmethyl O,O-dimethyl phosphorothioate (azamethiphos), known from The Pesticide Manual, 9^{th}Ed. (1991), The British Crop Protection Council, London, page 44;
(IV) S-3,4-dihydro-4-oxo-1,2,3-benzotriazin-3-ylmethyl O,O-dimethyl phosphorodithioate (azinphos-methyl), known from The Pesticide Manual, 9^{th}Ed. (1991), The British Crop Protection Council, London, page 46;
(V) ethyl N-[2,3-dihydro-2,2-dimethylbenzofuran-7-yloxycarbonyl(methyl)aminothio]-N-isopropyl-β-alaninate (benfuracarb), known from The Pesticide Manual, 9^{th}Ed. (1991), The British Crop Protection Council, London, page 57;
(VI) 2-methylbiphenyl-3-ylmethyl (Z)-(1 RS)-cis-3-(2-chloro-3,3,3-trifluoroprop-1-enyl)-2,2-dimethylcyclopropanecarboxylate (bifenthrin), known from The Pesticide Manual, 9^{th}Ed. (1991), The British Crop Protection Council, London, page 73;
(VII) 2-tert-butylimino-3-isopropyl-5-phenyl-1,3,5-thiadiazian4-one (buprofezin), known from The Pesticide Manual, 9^{th}Ed. (1991), The British Crop Protection Council, London, page 105;
(VIII) 2,3-dihydro-2,2-dimethylbenzofuran-7-yl methylcarbamate (carbofuran), known from The Pesticide Manual, 9^{th}Ed. (1991), The British Crop Protection Council, London, page 126;
(IX) 2,3-dihydro-2,2-dimethylbenzofuran-7-yl (dibutylaminothio)methylcarbamate (carbosulfan), known from The Pesticide Manual, 9^{th}Ed. (1991), The British Crop Protection Council, London, page 129;
(X) S,S'-(2-dimethylaminotrimethylene) bis(thiocarbamate) (cartap), known from The Pesticide Manual, 9^{th}Ed. (1991), The British Crop Protection Council, London, page 132;
(XI) 2-chloro-1-(2,4-dichlorophenyl)vinyl diethyl phosphate (chlorfenvinphos), known from The Pesticide Manual, 9^{th}Ed. (1991), The British Crop Protection Council, London, page 141;
(XII) 1-[3,5-dichloro-4-(3-chloro-5-trifluoromethyl-2-pyridyloxy)phenyl]-3-(2,6-difluorobenzoyl)urea (chlorfluazuron), known from The Pesticide Manual, 9^{th}Ed. (1991), The British Crop Protection Council, London, page 143;
(XIII) O,O-diethyl O-3,5,6-trichloro-2-pyridyl phosphorothioate (chlorpyrifos), known from The Pesticide Manual, 9^{th}Ed. (1991), The British Crop Protection Council, London, page 166;
(XIV) (RS)-α-cyano-4-fluoro-3-phenoxybenzyl (1 RS)-cis-trans-3-(2,2-dichlorovinyl)-2,2-dimethylcyclopropanecarboxylate (cyfluthrin), known from The Pesticide Manual, 9^{th}Ed. (1991), The British Crop Protection Council, London, page 198;
(XV) mixture of (S)-α-cyano-3-phenoxybenzyl Z-(1 R)-cis-3-(2-chloro-3,3,3-trifluoropropenyl)-2,2-dimethylcyclopropanecarboxylate and (R)-α-cyano-3-phenoxybenzyl Z-(1S)-cis-3-(2-chloro-3,3,3-trifluoropropenyl)-2,2-dimethylcyclopropanecarboxylate (lambda-cyhalothrin), known from The Pesticide Manual, 9^{th}Ed. (1991), The British Crop Protection Council, London, page 203;
(XVI) (RS)-α-cyano-3-phenoxybenzyl (1RS)-cis-trans-3-(2,2-dichlorovinyl)-1,1-dimethylcyclopropanecarboxylate (cypermethrin, cypermethrin high-cis), known from The Pesticide Manual, 9^{th}Ed. (1991), The British Crop Protection Council, London, page 208;
(XVII) racemate composed of (S)-α-cyano-3-phenoxybenzyl (1 R)-cis-3-(2,2-dichlorovinyl)-2,2-dimethylcyclopropanecarboxylate and (R)-α-cyano-3-phenoxybenzyl (1S)-cis-3-(2,2-dichlorovinyl)-2,2-dimethylcyclopropanecarboxylate (alpha-cypermethrin), known from The Pesticide Manual, 9^{th}Ed. (1991), The British Crop Protection Council, London, page 210;
(XVIII) N-cyclopropyl-1,3,5-triazin-2,4,6-triamine (cyromazin), known from The Pesticide Manual, 9^{th}Ed. (1991), The British Crop Protection Council, London, page 217;
(XIX) (S)-α-cyano-3-phenoxybenzyl (1R)-cis-3-(2,2-dibromovinyl)-2,2-dimethylcyclopropanecarboxylate (deltamethrin), known from The Pesticide Manual, 9^{th}Ed. (1991), The British Crop Protection Council, London, page 232;
(XX) a mixture of (S)-α-cyano-3-phenoxybenzyl (1 RS)-3-(2,2-dichlorovinyl)-2,2-dimethylcyclopropanecarboxylate and (S)-α-cyano-3-phenoxybenzyl (3RS)-3-(2,2-dichlorovinyl)-2,2-dimethylcyclopropanecarboxylate (zeta-cypermethrin), known from The Pesticide Manual, 10^{th}Ed. (1994), The British Crop Protection Council, London, page 265;
(XXI) O,O-diethyl O-2-isopropyl-6-methylpyrimidin-4-yl-phosphorothioate (diazinon), known from The Pesticide Manual, 9^{th}Ed. (1991), The British Crop Protection Council, London, page 243;
(XXII) 2,2-dichlorovinyl dimethyl phosphate (dichlorvos), known from The Pesticide Manual, 9^{th}Ed. (1991), The British Crop Protection Council, London, page 259;
(XXIII) (4-chlorophenyl)-3-(2,6-difluorobenzoyl)urea (diflubenzuron), known from The Pesticide Manual, 9^{th}Ed. (1991), The British Crop Protection Council, London, page 281;
(XXIV) (1,4,5,6,7,7-hexachloro-8,9,10-trinorborn-5-en-2,3-ylenbismethylene) sulfite (endosulfan), known from The Pesticide Manual, 9^{th}Ed. (1991), The British Crop Protection Council, London, page 332;
(XXV) α-ethylthio-o-tolyl methylcarbamate (ethiofencarb), known from The Pesticide Manual, 9^{th}Ed. (1991), The British Crop Protection Council, London, page 343;
(XXVI) O,O-dimethyl O-4-nitro-m-tolyl phosphorothioate (fenitrothion), known from The Pesticide Manual, 9^{th}Ed. (1991), The British Crop Protection Council, London, page 369;
(XXVII) 2-sec-butylphenyl methylcarbamate (fenobucarb), known from The Pesticide Manual, 9^{th}Ed. (1991), The British Crop Protection Council, London, page 371;
(XXVIII) (RS)-α-cyano-3-phenoxybenzyl (RS)-2-(4-chlorophenyl)-3-methylbutyrate (fenvalerate), known from The Pesticide Manual, 9^{th}Ed. (1991), The British Crop Protection Council, London, page 388;
(XXIX) (RS)-α-cyano-3-phenoxybenzyl N-(2-chloro-α,α,α-trifluoro-p-tolyl)-D-valinate (tau-fluvalinate), known from The Pesticide Manual, 9^{th}Ed. (1991), The British Crop Protection Council, London, page 428;
(XXX) [formyl(methyl)carbamoylmethyl] O,O-dimethyl phosphorodithioate (formothion), known from The Pesticide Manual, 9^{th}Ed. (1991), The British Crop Protection Council, London, page 440;
(XXXI) 4-methylthio-3,5-xylyl methylcarbamate (methiocarb), known from The Pesticide Manual, 10^{th}Ed. (1994), The British Crop Protection Council, London, page 677;
(XXXII) 7-chlorobicyclo[3.2.0]hepta-2,6-dien-6-yl dimethylphosphate (heptenophos), known from The Pesticide Manual, 9^{th}Ed. (1991), The British Crop Protection Council, London, page 467;
(XXXIII) (6-chloro-3-pyridylmethyl)-N-nitroimidazolidin-2-ylideneamine (imidacloprid), known from The Pesticide Manual, 9^{th}Ed. (1991), The British Crop Protection Council, London, page 491;
(XXXIV) O-5-chloro-1-isopropyl-1H-1,2,4-triazol-3-yl O,O-diethyl phosphorothioate (isazofos), known from The Pesticide Manual, 9^{th}Ed. (1991), The British Crop Protection Council, London, page 502;
(XXXV) 2-isopropylphenyl methylcarbamate (isoprocarb), known from The Pesticide Manual, 9^{th}Ed. (1991), The British Crop Protection Council, London, page 504;
(XXXVI) methyl (E)-3-(dimethoxyphosphinothiolyloxy)-2-methylacrylate (methacrifos), known from The Pesticide Manual, 9^{th}Ed. (1991), The British Crop Protection Council, London, page 562;
(XXXVII) O,S-dimethyl phosphoramidothioate (methamidophos), known from The Pesticide Manual, 9^{th}Ed. (1991), The British Crop Protection Council, London, page 563;
(XXXVIII) S-2,3-dihydro-5-methoxy-2-oxo-1,3,4-thiadiazol-3-ylmethyl O,O-dimethyl phosphorodithioate (methidathion), known from The Pesticide Manual, 9^{th}Ed. (1991), The British Crop Protection Council, London, page 567;
(XXXIX) S-methyl N-(methylcarbamoyloxy)thioacetimidate (methomyl), known from The Pesticide Manual, 9^{th}Ed. (1991), The British Crop Protection Council, London, page 570;
(XL) methyl 3-(dimethoxyphosphinoyloxy)but-2-enoate (mevinphos), known from The Pesticide Manual, 9^{th}Ed. (1991), The British Crop Protection Council, London, page 592;
(XLI) dimethyl (E)-1-Methyl-2-(methylcarbamoyl)vinyl phosphate (monocrotophos), known from The Pesticide Manual, 9^{th}Ed. (1991), The British Crop Protection Council, London, page 597;
(XLII) O,O-diethyl O-4-nitrophenyl phosphorothioate (parathion), known from The Pesticide Manual, 9^{th}Ed. (1991), The British Crop Protection Council, London, page 648;
(XLIII) O,O-dimethyl O-4-nitrophenyl phosphorothioate (parathion-methyl), known from The Pesticide Manual, 9^{th}Ed. (1991), The British Crop Protection Council, London, page 650;
(XLIV) S-6-chloro-2,3-dihydro-2-oxo-1,3-benzoxazol-3-ylmethyl O,O-diethyl phosphorodithioate (phosalone), known from The Pesticide Manual, 9^{th}Ed. (1991), The British Crop Protection Council, London, page 674;
(XLV) 2-chloro-2-diethylcarbamoyl-1-methylvinyl dimethyl phosphate (phosphamidon), known from The Pesticide Manual, 9^{th}Ed. (1991), The British Crop Protection Council, London, page 679;
(XLVI) 2-dimethylamino-5,6-dimethylpyrimidin-4-yl dimethylcarbamate (pirimicarb), known from The Pesticide Manual, 9^{th}Ed. (1991), The British Crop Protection Council, London, page 690;
(XLVII) O-4-bromo-2-chlorophenyl O-ethyl S-propyl phosphorothioate (profenofos), known from The Pesticide Manual, 9^{th}Ed. (1991), The British Crop Protection Council, London, page 705;
(XLVIII) 2-isopropoxyphenyl methylcarbamate (propoxur), known from The Pesticide Manual, 9^{th}Ed. (1991), The British Crop Protection Council, London, page 727;
(XLIX) 1-(3,5-dichloro-2,4-difluorophenyl)-3-(2,6-difluorobenzoyl)urea (teflubenzuron), known from The Pesticide Manual, 9^{th}Ed. (1991), The British Crop Protection Council, London, page 790;
(L) S-tert-butylthiomethyl O,O-dimethyl phosphorodithioate (terbufos), known from The Pesticide Manual, 9^{th}Ed. (1991), The British Crop Protection Council, London, page 795;
(LI) ethyl (3-tert-butyl-1-dimethylcarbamoyl-1H-1,2,4-triazol-5-yl-thio)acetate, (triazamate), known from The Pesticide Manual, 10^{th}Ed. (1994), The British Crop Protection Council, London, page 1006;
(LII) a substance obtainable from Bacillus thuringiensis strain GC91 (NCTC11821), disclosed in EP-B-0 178 151 ;
(LIII) abamectin, known from The Pesticide Manual, 9^{th}Ed. (1991), The British Crop Protection Council, London, page 3;
(LIV) isopropyl 4,4'-dibromobenzilate (bromopropylate), known from The Pesticide Manual, 9^{th}Ed. (1991), The British Crop Protection Council, London, page 99;
(LV) 2-sec-butylphenyl methylcarbamate (fenobucarb), known from The Pesticide Manual, 9^{th}Ed. (1991), The British Crop Protection Council, London, page 371;
(LVI) N-tert-butyl-N'-(4-ethylbenzoyl)-3,5-dimethylbenzohydrazide (tebufenozide), known from The Pesticide Manual, 10^{th}Ed. (1994), The British Crop Protection Council, London, page 943;
(LVII) (±)-5-amino-1-(2,6-dichloro-α,α,α-trifluoro-p-tolyl)-4-trifluoromethyl-sulfinylpyrazole-3-carbonitrile (fipronil), known from The Pesticide Manual, 10^{th}Ed. (1994), The British Crop Protection Council, London, page 463;
(LVIII) α-cyano-4-fluoro-3-phenoxybenzyl-3-(2,2-dichlorovinyl)-2,2-dimethylcyclopropanecarboxylate (beta-cyfluthrin), known from The Pesticide Manual, 10^{th}Ed. (1994), The British Crop Protection Council, London, page 250;
(LIX) (4-ethoxyphenyl)[3-(4-fluoro-3-phenoxyphenyl)propyl](dimethyl)silane (silafluofen), known from The Pesticide Manual, 10^{th}Ed. (1994), The British Crop Protection Council, London, page 912;
(LX) a mixture of 50 to 80 % of (2RS,4SR)-4-(2-ethyl-1,3-dioxolan-4-ylmethoxy)phenyl phenyl ether and 50 to 20 % of (2RS,4RS)-4-(2-ethyl-1 ,3-dioxolan-4-ylmethoxy)phenyl phenyl ether (diofenolan), known from The Pesticide Manual, 10^{th}Ed. (1994), The British Crop Protection Council, London, page 363;
(LXI) tert-butyl (E)-α-(1,3-dimethyl-5-phenoxypyrazol-4-yl-methyleneamino-oxy)-p-toluate (fenpyroximate), known from The Pesticide Manual, 10^{th}Ed. (1994), The British Crop Protection Council, London, page 450;
(LXII) 2-tert-butyl-5-(4-tert-butylbenzylthio)-4-chloropyridazin-3(2H)-one (pyridaben), known from The Pesticide Manual, 10^{th}Ed. (1994), The British Crop Protection Council, London, page 879;
(LXIII) 4-tert-butylphenethyl quinazolin-4-yl ether (fenazaquin), known from The Pesticide Manual, 10^{th}Ed. (1994), The British Crop Protection Council, London, page 426;
(LXIV) 4-phenoxyphenyl (RS)-2-(pyridyloxy)propyl ether (pyriproxyfen), known from The Pesticide Manual, 10^{th}Ed. (1994), The British Crop Protection Council, London, page 887;
(LXV) 5-chloro-N-{2-[4-(2-ethoxyethyl)-2,3-dimethylphenoxy]ethyl}-6-ethylpyrimidin-4-amine (pyrimidifen), known from The Pesticide Manual, 10^{th}Ed. (1994), The British Crop Protection Council, London, page 887;
(LXVI) (E)-N-(6-chloro-3-pyridylmethyl)-N-ethyl-N'-methyl-2-nitrovinylideneamine (nitenpyram), known from The Pesticide Manual, 10^{th}Ed. (1994), The British Crop Protection Council, London, page 736;
(LXVII) (E)-N¹-[(6-chloro-3-pyridyl)methyl]-N²-cyano-N¹-methylacetamidine (NI-25, acetamiprid), known from The Pesticide Manual, 10^{th}Ed. (1994), The British Crop Protection Council, London, page 730;
(LXVIII) butyl 2,3-dihydro-2,2-dimethylbenzofuran-7-yl N,N'-dimethyl-N,N'-dithiocarbamate (furathiocarb), known from The Pesticide Manual, 9^{th}Ed. (1991), The British Crop Protection Council, London, page 448; and
(LXIX) avermectin B₁ (abamectin), known from The Pesticide Manual, 10^{th}Ed. (1994), The British Crop Protection Council, London, page 1,
and at least one auxiliary.

The compound 1-tert-butyl-3-(2,6-di-isopropyl-4-phenoxyphenyl)thiourea (diafenthiuron) of the formula (A) is described, for example, in The Pesticide Manual, 10^{th}Ed. (1994), The British Crop Protection Council, London, page 294.

The agrochemically useful salts of the compound of the formula (A) are, for example, acid addition salts of inorganic and organic acids, in particular of hydrochloric acid, hydrobromic acid, sulfuric acid, nitric acid, perchloric acid, phosphoric acid, formic acid, acetic acid, trifluoroacetic acid, oxalic acid, malonic acid, toluene sulfonic acid, or benzoic acid.

Preferred within the scope of the present invention are compositions which comprise the compound of the formula (A) in free form.

Also preferred is a composition which comprises, besides the compound of the formula (A), only one further pesticidally active compound (I) to (LXIX).

Particularly preferred is a composition which comprises, together with the compound of the formula (A), either
a) fenoxycarb or b) methiocarb, or c) beta-cyfluthrin, or d) pirimicarb, or e) triazamate, or f) imidacloprid, or g) azamethiphos, or h) monocrotophos, or i) methidathion, or k) cyromazin, or I) profenofos, or m) cyhalothrin, or n) cypermethrin, or o) aldicarb, or p) deltamethrin, or q) endosulfan, or r) chlorpyrifos, or s) methomyl, or t) terbufos or u) carbofuran, or v) a substance obtainable from Bacillus thuringiensis strain GC 91, or w) chlorfluazuron.

The active combination according to the invention comprises the active ingredient of the formula (A) and one of the active ingredients (I) to (LXIX) preferably in a ratio of 100:1 to 1:50, especially 1:50 to 50:1, in particular in a ratio of between 1:20 and 20:1, especially between 10:1 and 1:10, very especially between 5:1 and 1:5, especially preferably between 2:1 and 1:2, also preferably between 4:1 and 2:1, very particularly in a ratio of 1:1, or 5:1, or 5:2, or 5:3, or 5:4, or 4:1, or 4:2, or 4:3, or 3:1, or 3:2, or 1:5, or 2:5, or 3:5, or 4:5, or 1:4, or 3:4, or 1:3, or 2:3, or 1:2. These ratios are to be understood as meaning, on the one hand, weight ratios, and on the other hand also molar ratios.

A particularly effective composition has proved to be one which comprises four parts by weight of the compound of the formula (A) (diafenthiuron) and one part by weight of the compound (I) (ethyl 2-(4-phenoxyphenoxy)ethylcarbamate, fenoxycarb); a composition which is thus composed is very especially suitable for controlling representatives of the family Pyralidae, very especially representatives of the genus Hellula, in particular Hellula undalis, representatives of the family Plutellidae (Yponomeutoidae), in particular the genus Plutella, especially Plutella xylostella, and representatives of the family Noctuidae, especially the genus Spodoptera, in particular Spodoptera littoralis.

Surprisingly, it has now been found that the combination of the active ingredient of the formula (A) or of a salt thereof with one of the active ingredients (I) to (LXIX) causes not only an additive widening of the spectrum of action on the pests to be controlled, which would be expected in principle, but also that it provokes a synergistic effect which extends the limits of the action of both preparations from two points of view:

Firstly, the rates of application of the compound of the formula (A) and of the individual compounds (I) to (LXIX) are reduced while retaining an equally good action. Secondly, the combined mixture also achieves a high degree of pest control where both individual substances have become completely ineffective when unduly low rates are applied. This allows, on the one hand, a considerable widening of the spectrum of pests which can be controlled and, on the other hand, an increased safety upon use.

In addition to the actual synergistic action with regard to the pesticidal activity, the compositions according to the invention additionally have other surprising advantages, which can also be termed synergistic in a wider sense: for example, they allow the control of pests which are not, or not sufficiently, controlled by the individual compounds (A) and (I) to (LXIX), and the compositions according to the invention are better tolerated by plants, i.e. they are less phytotoxic than the individual compounds (A) and (I) to (LXIX). Moreover, for example, various development stages of the insects can be controlled, which is in some cases not the case in the individual compounds (A) and (I) to (LXIX), since these compounds can, for example, only be used as adulticides or only as larvicides against very specific instars. In addition, for example, combinations of the compound (A) with certain compounds (I) to (LXIX) show up more favourable behaviour during ginding, mixing, storage and also spraying.

The compositions according to the invention are valuable for preventive and/or curative treatment in the field of pest control even at low rates of application while being well tolerated by warm-blooded species, fish and plants and have a very favourable biocidal spectrum. The compositions according to the invention are active against all or individual development stages of normally sensitive, but also resistant, animal pests, such as insects and representatives of the order Acarina. The insecticidal and/or acaricidal action of the compounds according to the invention can become obvious either directly, i.e. by destroying the pests immediately or only after some time has elapsed, for example during an ecdysis, or indirectly, for example by a reduced oviposition rate and/or hatching rate, the good action corresponding to a destruction rate (mortality) of at least 50 to 60 %.

The abovementioned animal pests include, for example:
from the order Lepidoptera
Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula spp., Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
from the order Coleoptera, for example,
Agriotes spp., Anthonomus spp., Atomaria linearis, Chaetocnema tibialis, Cosmopolites spp., Curculio spp., Dermestes spp., Diabrotica spp., Epilachna spp., Eremnus spp., Leptinotarsa decemlineata, Lissorhoptrus spp., Melolontha spp., Oryzaephilus spp., Otiorhynchus spp., Phlyctinus spp., Popillia spp., Psylliodes spp., Rhizopertha spp., Scarabeidae, Sitophilus spp., Sitotroga spp., Tenebrio spp., Tribolium spp. and Trogoderma spp.;
from the order Orthoptera, for example,
Blatta spp., Blattella spp., Gryllotalpa spp., Leucophaea maderae, Locusta spp., Periplaneta spp. and Schistocerca spp.;
from the order Isoptera, for example,
Reticulitermes spp.;
from the order Psocoptera, for example.
Liposcelis spp.;
from the order Anoplura, for example,
Haematopinus spp., Linognathus spp., Pediculus spp., Pemphigus spp. and Phylloxera spp.;
from the order Mallophaga, for example,
Damalinea spp. and Trichodectes spp.;
from the order Thysanoptera, for example,
Frankliniella spp., Hercinothrips spp., Taeniothrips spp., Thrips palmi, Thrips tabaci and Scirtothrips aurantii;
from the order Heteroptera, for example,
Cimex spp., Distantiella theobroma, Dysdercus spp., Euchistus spp. Eurygaster spp. Leptocorisa spp., Nezara spp., Piesma spp., Rhodnius spp., Sahlbergella singularis, Scotinophara spp. and Triatoma spp.;
from the order Homoptera, for example,
Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma lanigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
from the order Hymenoptera, for example,
Acromyrmex, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;
from the order Diptera, for example,
Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp. and Tipula spp.;
from the order Siphonaptera, for example,
Ceratophyllus spp. and Xenopsylla cheopis;
from the order Thysanura, for example,
Lepisma saccharina and
from the order Acarina, for example,
Acarus siro, Aceria sheldoni, Aculus schlechtendali, Amblyomma spp., Argas spp., Boophilus spp., Brevipalpus spp., Bryobia praetiosa, Calipitrimerus spp., Chorioptes spp., Dermanyssus gallinae, Eotetranychus carpini, Eriophyes spp., Hyalomma spp., Ixodes spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp..

The pest control within the scope of the invention extends in particular to pests
(1 ) from the order Lepidoptera,
   very especially Adoxophyes spp., Alabama argillaceae, Clysia ambiguella, Clysia pomonella, Crocidolomia binotalis, Cydia spp., Earias spp., Heliothis spp., Hellula spp., Lobesia botrana, Ostrinia nubilalis, Phthorimaea operculella, Plutella spp., Sparganothis spp. and Spodoptera spp.;
(2) from the order Coleoptera,
   very especially the family Curculionidae, in particular Anthonomus spp., very especially A. grandis, very especially of the family Chrysomelidae, in particular Leptinotarsa decemlineata;
(3) from the order Homoptera,
   especially from the family Aphididae, in particular from the genus Aphis, very especially A gossypii, especially from the family Aleurodidae, in particular Aleurothrixus floccus and Bemisia tabaci, especially from the family Psyllidae, very especially Psylla spp.,
(4) from the order Thysanoptera,
   in particular Frankliniella spp., Thrips palmi and Thrips tabaci;
(5) from the order Acarina,
   especially from the family Eriophyidae, in particular Aculus schlechtendali and Phyllocoptruta oleivora;
(6) from the order Diptera,
   in particular from the family Agromyzidae, especially Liriomyza trifolii.

The mixtures of active ingredients according to the invention can be used for controlling, i.e. containing or destroying, pests of the abovementioned type which occur in particular on plants, very especially in crop plants and ornamentals, in agricultural, in horticulture and in forests, or on parts of such plants, such as fruits, flowers, foliage, stalks, tubers or roots, and even parts of the plants which are formed at a later stage are protected in some cases against these pests.

The pesticide mixture according to the invention can be applied advantageously for pest control in cereals, such as maize or sorghum; in fruit, for example pome fruit, stone fruit and soft fruit, such as apples, pears, plums, peaches, almonds, cherries or berries, for example strawberries, raspberries and blackberries; in pulses, such as beans, lentils, peas or soya; in oil crops, such as oilseed rape, mustard, poppies, olives, sunflowers, coconut, castor, cocoa or groundnuts; in cucurbits, such as pumpkins, cucumbers or melons; in fibre plants, such as cotton, flax, hemp or jute; in citrus fruit, such as oranges, lemons, grapefruit or tangerines; in vegetables, such as spinach, lettuce, asparagus, cabbage species, carrots, onions, tomatoes, potatoes or bell peppers, in the Lauraceae, such as avocado, cinnamomum or camphor, or in tobacco, nuts, coffee, egg plants, sugar cane, tea, pepper, grapevines, hops, Musaceae, latex plants or ornamentals, especially in maize, sorghum, pome and stone fruit, pulses, cucurbits, cotton, citrus fruit, vegetables, egg plants, grapevines, hops or omamentals, in particular in maize, sorghum, apples, pears, plums, peaches, beans, peas, soya, olives, sunflowers, coconut, cocoa, groundnuts, cucumbers, pumpkins, citrus fruit, cabbage species, tomatoes, potatoes, grapevines or cotton, particularly preferably in grapevines, citrus fruit, apples, pears, tomatoes and cotton.

Other fields of application of the mixtures of active ingredients according to the invention are the protection of stored products and stores and of material and, in the hygiene sector, in particular the protection of domestic animals and productive live stock against pests of the abovementioned type.

The pesticides according to the invention are, depending on the intended aims and the prevailing circumstances, emulsifiable concentrates, suspension concentrates, ready-to-spray or ready-to-dilute solutions, spreadable pastes, dilute emulsions, soluble powders, dispersable powders, wettable powders, dusts, granules or encapsulations in polymeric substances, all of these comprising the compound of the formula (A) or a salt thereof and one of the other active ingredients (I) to (LXIX) according to the invention.

In these compositions, the active ingredients are employed in pure form, for example the solid active ingredients in a specific particle size, or, preferably, together with - at least - one of the auxiliaries conventionally used in the art of formulation, such as extenders, for example solvents or solid carriers, or surface-active compounds (surfactants).

Examples of solvents which are suitable are: unhydrogenated or partially hydrogenated aromatic hydrocarbons, preferably the fractions C₈ to C₁₂ of alkylbenzenes, such as xylene mixtures, alkylated naphthalene or tetrahydronaphthalene, aliphatic or cycloaliphatic hydrocarbons, such as paraffins or cyclohexane, alcohols, such as ethanol, propanol or butanol, glycols and their ethers and esters, such as propylene glycol, dipropylene glycol ether, ethylene glycol, ethylene glycol monomethyl ether or ethylene glycol monoethyl ether, ketones, such as cyclohexanone, isophorone or diacetone alcohol, strongly polar solvents, such as N-methylpyrrolid-2-one, dimethyl sulfoxide or N,N-dimethylformamide, water, unepoxidized or epoxidized vegetable oils, such as unepoxidized or epoxidized rapeseed, castor, coconut or soya oil, and silicone oils.

Solid carriers which are used for example for dusts and dispersable powders are, as a rule, ground natural minerals, such as calcite, talc, kaolin, montmorillonite or attapulgite. Highly-disperse silicas or highly-disperse absorptive polymers may also be used to improve the physical properties. Suitable particulate, adsorptive carriers for granules are porous types, such as pumice, brick grit, sepiolite or bentonite, and suitable non-absorptive carrier materials are calcite or sand. Moreover, a large number of granulated materials of inorganic or organic nature, in particular dolomite or comminuted plant residues, may be used. Suitable surface-active compounds are, depending on the nature of the active ingredient to be formulated, non-ionic, cationic and/or anionic surfactants or surfactant mixtures have good emulsifying, dispersing and wetting properties. The surfactants listed below are only given by way of example; a large number of other surfactants conventionally used in the art of formulation and suitable according to the invention are described in the relevant literature.

Suitable non-ionic surfactants are mainly polyglycol ether derivatives of aliphatic or cycloaliphatic alcohols, saturated or unsaturated fatty acids and alkylphenols, which can have 3 to 30 glycol ether groups and 8 to 20 carbon atoms in the (aliphatic) hydrocarbon radical and 6 to 18 carbon atoms in the alkyl radical of the alkylphenols. Also suitable are water-soluble polyethylene oxide adducts with polypropylene glycol, ethylene diaminopolypropylene glycol and alkyl polypropylene glycol having 1 to 10 carbon atoms in the alkyl chain and comprising 20 to 250 ethylene glycol ether groups and 10 to 100 propylene glycol ether groups. The abovementioned compounds conventionally have 1 to 5 ethylene glycol units per propylene glycol unit. Examples which may be mentioned are nonylphenol polyethoxyethanols, castor oil polyglycol ether, polypropylene/polyethylene oxide adducts, tributylphenoxypolyethoxyethanol, polyethylene glycol and octylphenoxypolyethoxyethanol. Also suitable are fatty acid esters or polyoxyethylene sorbitan, such as polyoxyethylene sorbitan trioleate.

The cationic surfactants are mainly quaternary ammonium salts which have, as substituents, at least one alkyl radical having 8 to 22 carbon atoms and as further substituents lower, halogenated or unhalogenated alkyl, benzyl or lower hydroxyalkyl radicals. The salts are preferably in the form of halides, methylsulfates or ethylsulfates. Examples are stearyl--trimethyl-ammonium chloride and benzyl di-(2-chloroethyl)ethylammonium bromide.

Suitable anionic surfactants can be water-soluble soaps and also water-soluble synthetic surface-active compounds. Soaps which are suitable are the alkali metal salts, alkaline earth metal salts and substituted or unsubstituted ammonium salts of higher fatty acids (C₁₀-C₂₂), such as the sodium or potassium salts of oleic or stearic acid, or of natural fatty acid mixtures which can be obtained, for example, from coconut or tall oil; fatty acid methyltaurinates should furthermore be mentioned. However, so-called synthetic surfactants are used more frequently, in particular fatty sulfonates, fatty sulfates, sulfonated benzimidazole derivatives or alkylarylsulfonates. The fatty sulfonates and fatty sulfates are, as a rule, in the form of alkali metal salts, alkaline earth metal salts or substituted or unsubstituted ammonium salts and have, as a rule, an alkyl radical of 8 to 22 carbon atoms, alkyl also including the alkyl moiety of acyl radicals, for example the sodium salt or calcium salt of lignosulfonic acid, of the dodecylsulfuric ester or of a fatty alcohol sulfate mixture prepared from natural fatty acids. This group also includes the salts of the sulfuric esters and sulfonic acids of fatty alcohol/ethylene oxide adducts. The sulfonated benzimidazole derivatives comprise preferably 2 sulfonyl groups and a fatty acid radical having appproximately 8-22 carbon atoms. Alkylarylsulfonates are, for example. the sodium salts, calcium salts or triethanolammonium salts of dodecylbenzenesulfonic acid or of a naphthalenesulfonic acid/formaldehyde condensate. Suitable phosphates, for example salts of the phosphoric ester of a p-nonylphenol/(4-14)-ethylene oxide adduct, or phospholipids, are also suitable.

As a rule, the compositions comprise 0.1 to 99 %, in particular 0.1 to 95 %, of a mixture of the active ingredient of the formula (A) with one of the active ingredients (I) to (LXIX), and 1 to 99.9 %, in particular 5 to 99.9 %, of - at least - one solid or liquid auxiliary, it being possible, as a rule, for 0 to 25 %, in particular 0.1 to 20 %, of the compositions to be surfactants (% in each case meaning percent by weight). While concentrated compositions are more preferred as commercially available goods, the end consumer uses, as a rule, dilute compositions which have considerably lower concentrations of active ingredient. Preferred compositions are composed, in particular, as follows (% = percent by weight):

### Emulsifiable concentrates:

| | |
|---|---|
| Mixture of active ingredients: | 1 to 90 %, preferably 5 to 20 % |
| Surfactant: | 1 to 30 %, preferably 10 to 20 % |
| Solvent: | 5 to 98 %, preferably 70 to 85 % |

### Dusts:

| | |
|---|---|
| Mixture of active ingredients: | 0.1 to 10 %, preferably 0.1 to 1 % |
| Solid carrier: | 99.9 to 90 %, preferably 99.9 to 99 % |

### Suspension concentrates:

| | |
|---|---|
| Mixture of active ingredients: | 5 to 75 %, preferably 10 to 50 % |
| Water: | 94 to 24 %, preferably 88 to 30 % |
| Surfactant: | 1 to 40 %, preferably 2 to 30 % |

### Wettable powders:

| | |
|---|---|
| Mixture of active ingredients: | 0.5 to 90 %, preferably 1 to 80 % |
| Surfactant: | 0.5 to 20 %, preferably 1 to 15 % |
| Solid carrier: | 5 to 99 %, preferably 15 to 98 % |

### Granules:

| | |
|---|---|
| Mixture of active ingredients: | 0.5 to 30 %, preferably 3 to 15 % |
| Solid carrier: | 99.5 to 70 %, preferably 97 to 85 % |

The compositions according to the invention can also comprise other solid or liquid auxiliaries, such as stabilizers, for example epoxidized or unepoxidized vegetable oils (for example epoxidized coconut oil, rapeseed oil or soya oil), antifoams, for example silicone oil, preservatives, viscosity regulators, binders and/or adhesives, and also fertilizers or other active ingredients for achieving specific effects, for example bactericides, fungicides, nematicides, molluscicides or herbicides.

The compositions according to the invention are prepared in a known manner, for example in the absence of auxiliaries by grinding, screening and/or compressing a solid active ingredient or mixture of active ingredients, for example to a specific particle size, and, in the presence of at least one auxiliary, for example by intimately mixing and/or grinding the active ingredient or mixture of active ingredients with the auxiliary (auxiliaries). The process for the preparation of the compositions is therefore a further subject-matter of the invention.

The mixtures of the compound of the formula (A) with one of the compounds (I) to (LXIX) are preferably employed with the auxiliaries conventionally used in the art of formulation and are therefore processed in a known manner to give, for example, emulsifiable concentrates, ready-to-spray or ready-to-dilute solutions, dilute emulsions, wettable powders, soluble powders, dusts, granules, and also encapsulations, for example in polymeric substances. The methods of application, such as spraying, atomizing, dusting, wetting, scattering or pouring, and the type of composition are selected to suit the intended aims and the prevailing circumstances.

The methods of application for the compositions, i.e. the methods of controlling pests of the abovementioned type, such as spraying, atomizing, dusting, brushing on, seed dressing, scattering or pouring, which are to be selected to suit the intended aims and the prevailing circumstances, and also the use of the compositions for controlling pests of the abovementioned type are further subject-matters of the invention. Typical rates of application are between 0.1 and 1000 ppm, preferably between 0.1 and 500 ppm, of active ingredient. The rate of application can vary within wide limits and depends on the nature of the soil, the type of application (foliar application; seed treatment; use in the seed furrow), the crop plant, the pest to be controlled, the respective climate prevailing, and other factors determined by type of application, timing of application and target crop. The rates of application per hectare are generally 1 to 2000 g of active ingredient per hectare, in particular 10 to 1000 g/ha, preferably 20 to 600 g/ha.

A preferred method of application in the field of crop protection is application to the foliage of the plants (foliar application), it being possible to adjust frequency and rate of application depending on the risk of infestation of the pest in question. Alternatively, the active ingredients can reach the plants via the root system (systemic action), by drenching the locus of the plants with a liquid composition or by incorporating the active ingredients in solid form into the locus of the plants, for example the soil, for example in the form of granules (soil application). In the case of paddy rice, such granules can be metered into the flooded paddy-field.

The compositions according to the invention are also suitable for protecting plant propagation material, for example seed, such as fruits, tubers or kernels, or nursery plants, against animal pests. The propagation material can be treated with the composition before planting, for example seed can be dressed before sowing. The active ingredients according to the invention can also be applied to seed kernels (coating), either by soaking the kernels in a liquid composition or by coating them with a solid composition. Altematively, the composition can be applied to the planting site when planting the propagation material, for example into the seed furrow during sowing. These treatment methods for plant propagation material and the resulting treated plant propagation material are other subject-matters of the invention.

The following examples are intended to illustrate the invention. They do not impose any limitation on the invention.

### Formulation examples (% = percent by weight, ratios of active ingredients = weight ratios)

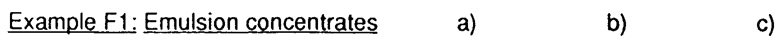

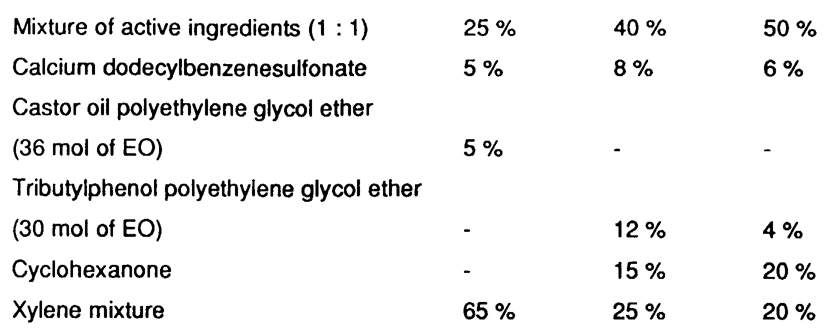

Emulsions of any desired concentration can be prepared from such concentrates by dilution with water.

| Example F2: Solutions | a) | b) | c) | d) |
|---|---|---|---|---|
| Mixture of active ingredients (1 : 3) | 80 % | 10 % | 5 % | 95 % |
| Ethylene glycol monomethyl ether | 20 % | - | - | - |
| Polyethylene glycol MW 400 | - | 70 % | - | - |
| N-Methyl-2-pyrrolidone | - | 20 % | - | - |
| Epoxidized coconut oil | - | - | 1 % | 5 % |
| Petroleum ether (boiling range 160 - 190 C) | - | - | 94 % | - |

The solutions are suitable for use in the form of microdrops.

| Example F3: Granules | a) | b) | c) | d) |
|---|---|---|---|---|
| Mixture of active ingredients (3 : 1) | 5 % | 10 % | 8 % | 21 % |
| Kaolin | 94 % | - | 79 % | 54 % |
| Highly-disperse silica | 1 % | - | 13 % | 7 % |
| Attapulgite | - | 90 % | - | 18 % |

The active ingredients are dissolved together in dichloromethane, the solution is sprayed onto the carrier, and the solvent is subsequently evaporated in vacuo.

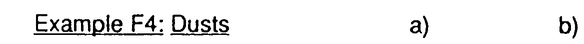

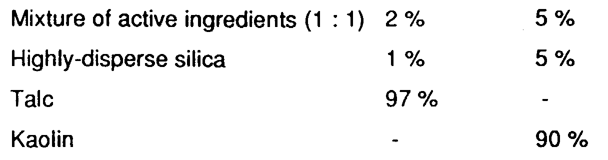

Ready-to-use dusts are obtained by intimately mixing the carriers with the active ingredients.

| Example F5: Wettable powders | a) | b) | c) |
|---|---|---|---|
| Mixture of active ingredients (4 : 1) | 25 % | 50 % | 75 % |
| Sodium lignosulfonate | 5 % | 5 % | - |
| Sodium lauryl sulfate | 3 % | - | 5 % |
| Sodium diisobutylnaphthalenesulfonate | - | 6 % | 10 % |
| Octylphenol polyethylene glycol ether (7-8 mol of EO) | - | 2 % | - |
| Highly-disperse silica | 5 % | 10 % | 10 % |
| Kaolin | 62 % | 27 % | - |

The active ingredients are mixed with the additives and ground thoroughly in a suitable mill. This gives wettable powders which can be diluted with water to give suspensions of any desired concentration.

| Example F6: Emulsion concentrate | |
|---|---|
| Mixture of active ingredients (1 : 2) | 10 % |
| Octylphenol polyethylene glycol ether (4-5 mol of EO) | 3 % |
| Calcium dodecylbenzenesulfonate | 3 % |
| Castor oil polyglycol ether (36 mol of EO) | 4 % |
| Cyclohexanone | 30 % |
| Xylene mixture | 50 % |

Emulsions of any desired concentration can be prepared from this concentrate by dilution with water.

| Example F7: Dusts | a) | b) |
|---|---|---|
| Mixture of active ingredients (5 : 2) | 5 % | 8 % |
| Talc | 95 % | - |
| Kaolin | - | 92 % |

Ready-to-use dusts are obtained by mixing the active ingredients with the carrier and grinding the mixture in a suitable mill.

| Example F8: Extruder granules | |
|---|---|
| Mixture of active ingredients (2 : 1) | 10 % |
| Sodium lignosulfonate | 2 % |
| Carboxymethylcellulose | 1 % |
| Kaolin | 87 % |

The active ingredients are mixed with the additives, and the mixture is ground and moistened with water. This mixture is extruded, granulated and subsequently dried in a stream of air.

| Example F9: Coated granules | |
|---|---|
| Mixture of active ingredients (1 : 1) | 3 % |
| Polyethylene glycol (MW 200) | 3 % |
| Kaolin | 94 % |

In a mixer, the finely ground active ingredients are applied uniformly to the kaolin which has been moistened with polyethylene glycol. In this manner, dust-free coated granules are obtained.

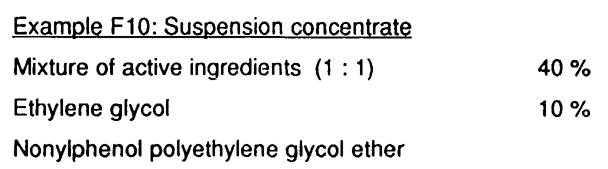

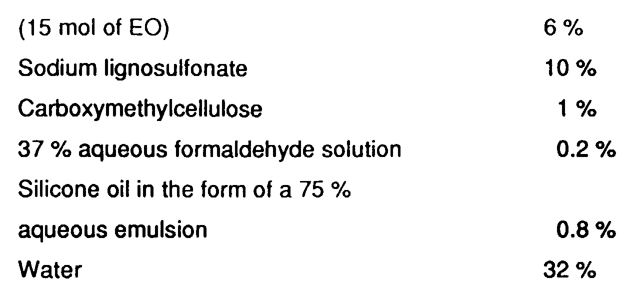

The finely ground active ingredients are mixed intimately with the additives. This gives a suspension concentrate from which suspsensions of any desired concentration can be prepared by dilution with water.

Frequently, it is more convenient to formulate the active ingredient of the formula (A) and one of the other components (I) to (LXIX) individually and only to combine them shortly before application in the applicator in the desired mixing ratio in the form of a "tank mix" in water.

### Biological examples. (% = percent by weight unless otherwise specified)

A synergistic effect is always present when the action of the combination of the active ingredient of the formula (A) with one of the active ingredients (I) to (LXIX) exceeds the total of the action of the active ingredients applied individually.

For example, the expected pesticidal action Ae for a given combination of two pesticides can be calculated as follows (cf. COLBY, S.R., "Calculating synergistic and antagonistic response of herbicide combinations", Weeds 15, pages 20-22, 1967):

In this formula:
X = Percent mortality when treated with the compound of the formula (A) at a rate of application of p kg per hectare in comparison with the untreated control (= 0 %).
Y = Percent mortality when treated with a compound (I) to (LXIX) at a rate of application of q kg per hectare in comparison with the untreated control.
Ae = Expected pesticidal action (percent mortality in comparison with the untreated control) after treatment with the compound of the formula (A) and a compound (I) to (LXIX) at a rate of application of p + q kg of active ingredient per hectare.

If the actually observed action exceeds the expected value Ae, synergism is present.

### Example B1 : Action against Bemisia tabaci

Dwarf bean plants are placed into gauze cages and populated with Bemisia tabaci adults. After oviposition, all adults are removed. 10 days later, the plants and the nymphs thereon are sprayed with an aqueous suspension spray mixture comprising 50 ppm of the mixture of active ingredients. After a further 14 days, the percentage hatching rate of the eggs is evaluated in comparison with untreated control batches.

In this experiment, the combinations of the active ingredient of the formula (A) with one of the active ingredients (I) to (LXIX) have a synergistic effect. In particular, a suspension spray mixture comprising 40 ppm of the compound (A) and 10 ppm of the compound (I) is very effective.

### Example B2: Action against Spodoptera littoralis caterpillars

Young soya plants are sprayed with an aqueous emulsion spray mixture comprising 360 ppm of the mixture of active ingredients. After the spray coating has dried on, the soya plants are populated with 10 third-instar Spodoptera littoralis caterpillars and placed in a plastic container. The test is evaluated 3 days later. The percentage reduction in population or the percentage reduction of feeding damage (% action) is determined by comparing the number of dead caterpillars and the feeding damage on the treated plants with those on the untreated plants.

In this experiment, the combinations of the active ingredient of the formula (A) with one of the active ingredients (I) to (LXIX) have a synergistic effect. In particular, a suspension spray mixture comprising 300 ppm of compound (A) and 60 ppm of compound (I) and a suspension spray mixture comprising 270 ppm of compound (A) and 90 ppm of compound (I) are very effective.

### Example B3: Ovicidal action against Lobesia botrana

Lobesia botrana eggs deposited on filter paper are immersed briefly into a test solution comprising 400 ppm of the mixture of active ingredients to be tested in acetone/water. After the test solution has dried on, the eggs are incubated in Petris dishes. After 6 days, the percentage hatching rate of the eggs is evaluated in comparison with untreated control batches (% reduction in hatching rate).

In this test, the combinations of the active ingredient of the formula (A) with one of the active ingredients (I) to (LXIX) have a synergistic effect. In particular, a suspension spray mixture which comprises 200 ppm of compound (A) and 200 ppm of compound (I) and a suspension spray mixture which comprises 300 ppm of compound (A) and 100 ppm of compound (I) are very effective.

### Example B4: Ovicidal action against Heliothis virescens

Heliothis virescens eggs deposited on filter paper are immersed briefly into a test solution comprising 400 ppm of the mixture of active ingredients to be tested in acetone/water. After the test solution has dried on, the eggs are incubated in Petri dishes. After 6 days, the percentage hatching rate of the eggs is evaluated in comparison with untreated control batches (% reduction in hatching rate).

In this test, the combinations of the active ingredient of the formula (A) with one of the active ingredients (I) to (LXIX) have a synergistic effect. In particular, a suspension spray mixture which comprises 240 ppm of compound (A) and 160 ppm of compound (I) and a suspension spray mixture which comprises 300 ppm of compound (A) and 100 ppm of compound (I) are very effective.

### Example B5: Action against Plutella xylostella caterpillars

Young cabbage plants are sprayed with an aqueous emulsion spray mixture comprising 440 ppm of the active ingredient. After the spray coating has dried on, the cabbage plants are populated with 10 third-instar Plutella xylostella caterpillars and placed in a plastic container. The test is evaluated 3 days later. The percentage reduction in population or the percentage reduction in feeding damage (% action) is determined by comparing the number of dead caterpillars and the feeding damage on the treated plants with those on the untreated plants.

In this experiment, the combinations of the active ingredient of the formula (A) with one of the active ingredients (I) to (LXIX) have a synergistic effect. In particular, a suspension spray mixture comprising 400 ppm of compound (A) and 40 ppm of compound (I) and a suspension spray mixture comprising 220 ppm of compound (A) and 220 ppm of compound (I) are very effective.

## Claims

1. A pesticidal composition which comprises a pesticidally-synergistically active combination, in variable proportions, of the pesticidally active compound of the formula 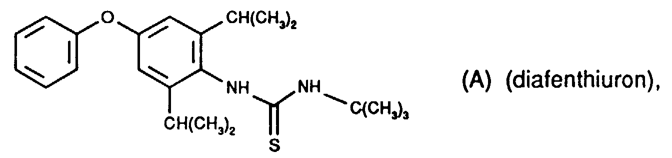 in free form or in the form of an agrochemically acceptable salt,
and one or more pesticidally active compound(s) selected from the group of pesticides consisting of
(I) ethyl 2-(4-phenoxyphenoxy)ethylcarbamate (fenoxycarb);
(II) 2-methyl-2-(methylthio)propionaldehyde O-methylcarbamoyloxime (aldicarb);
(III) S-6-chloro-2,3-dihydro-2-oxo-1,3-oxazolo[4,5-b]pyridin-3-ylmethyl O,O-dimethyl phosphorothioate (azamethiphos);
(IV) S-3,4-dihydro-4-oxo-1,2,3-benzotriazin-3-ylmethyl O,O-dimethyl phosphorodithioate (azinphos-methyl);
(V) ethyl N-[2,3-dihydro-2,2-dimethylbenzofuran-7-yloxycarbonyl(methyl)aminothio]-N-isopropyl-β-alaninate (benfuracarb);
(VI) 2-methylbiphenyl-3-ylmethyl (Z)-(1RS)-cis-3-(2-chloro-3,3,3-trifluoroprop-1-enyl)-2,2-dimethylcyclopropanecarboxylate (bifenthrin);
(VII) 2-tert-butylimino-3-isopropyl-5-phenyl-1,3,5-thiadiazian-4-one (buprofezin);
(VIII) 2,3-dihydro-2,2-dimethylbenzofuran-7-yl methylcarbamate (carbofuran);
(IX) 2,3-dihydro-2,2-dimethylbenzofuran-7-yl (dibutylaminothio)methylcarbamate (carbosulfan);
(X) S,S'-(2-dimethylaminotrimethylene) bis(thiocarbamate) (cartap);
(XI) 2-chloro-1-(2,4-dichlorophenyl)vinyl diethyl phosphate (chlorfenvinphos);
(XII) 1-[3,5-dichloro-4-(3-chloro-5-trifluoromethyl-2-pyridyloxy)phenyl]-3-(2,6-difluorobenzoyl)urea (chlorfluazuron);
(XIII) O,O-diethyl O-3,5,6-trichloro-2-pyridyl phosphorothioate (chlorpyrifos);
(XIV) (RS)-α-cyano-4-fluoro-3-phenoxybenzyl (1RS)-cis-trans-3-(2,2-dichlorovinyl)-2,2-dimethylcyclopropanecarboxylate (cyfluthrin);
(XV) mixture of (S)-α-cyano-3-phenoxybenzyl Z-(1 R)-cis-3-(2-chloro-3,3,3-trifluoropropenyl)-2,2-dimethylcyclopropanecarboxylate and (R)-α-cyano-3-phenoxybenzyl Z-(1S)-cis-3-(2-chloro-3,3,3-trifluoropropenyl)-2,2-dimethylcyclopropanecarboxylate (lambda-cyhalothrin);
(XVI) (RS)-α-cyano-3-phenoxybenzyl (1RS)-cis-trans-3-(2,2-dichlorovinyl)-1,1-dimethylcyclopropanecarboxylate (cypermethrin, cypermethrin high-cis);
(XVII) racemate composed of (S)-α-cyano-3-phenoxybenzyl (1 R)-cis-3-(2,2-dichlorovinyl)-2,2-dimethylcyclopropanecarboxylate and (R)-α-cyano-3-phenoxybenzyl (1S)-cis-3-(2,2-dichlorovinyl)-2,2-dimethylcyclopropanecarboxylate (alpha-cypermethrin);
(XVIII) N-cyclopropyl-1,3,5-triazin-2,4,6-triamine (cyromazin);
(XIX) (S)-α-cyano-3-phenoxybenzyl (1 R)-cis-3-(2,2-dibromovinyl)-2,2-dimethylcyclopropanecarboxylate (deltamethrin);
(XX) a mixture of (S)-α-cyano-3-phenoxybenzyl (1 RS)-3-(2,2-dichlorovinyl)-2,2-dimethylcyclopropanecarboxylate and (S)-α-cyano-3-phenoxybenzyl (3RS)-3-(2,2-dichlorovinyl)-2,2-dimethylcyclopropanecarboxylate (zeta-cypermethrin);
(XXI) O,O-diethyl O-2-isopropyl-6-methylpydmidin-4-yl-phosphorothioate (diazinon);
(XXII) 2,2-dichlorovinyl dimethyl phosphate (dichlorvos);
(XXIII) (4-chlorophenyl)-3-(2,6-difluorobenzoyl)urea (diflubenzuron);
(XXIV) (1,4,5,6,7,7-hexachloro-8,9,10-trinorborn-5-en-2,3-ylenbismethylene) sulfite (endosulfan);
(XXV) α-ethylthio-o-tolyl methylcarbamate (ethiofencarb);
(XXVI) O,O-dimethyl O-4-nitro-m-tolyl phosphorothioate (fenitrothion);
(XXVII) 2-sec-butylphenyl methylcarbamate (fenobucarb);
(XXVIII) (RS)-α-cyano-3-phenoxybenzyl (RS)-2-(4-chlorophenyl)-3-methylbutyrate (fenvalerate);
(XXIX) (RS)-α-cyano-3-phenoxybenzyl N-(2-chloro-α,α,α-trifluoro-p-tolyl)-D-valinate (taufluvalinate);
(XXX) [formyl(methyl)carbamoylmethyl] O,O-dimethyl phosphorodithioate (formothion);
(XXXI) 4-methylthio-3,5-xylyl methylcarbamate (methiocarb);
(XXXII) 7-chlorobicyclo[3.2.0]hepta-2,6-dien-6-yl dimethylphosphate (heptenophos);
(XXXIII) (6-chloro-3-pyridylmethyl)-N-nitroimidazolidin-2-ylideneamine (imidacloprid);
(XXXIV) O-5-chloro-1-isopropyl-1H-1,2,4-triazol-3-yl O,O-diethyl phosphorothioate (isazofos);
(XXXV) 2-isopropylphenyl methylcarbamate (isoprocarb);
(XXXVI) methyl (E)-3-(dimethoxyphosphinothiolyloxy)-2-methylacrylate (methacrifos);
(XXXVII) O,S-dimethyl phosphoramidothioate (methamidophos);
(XXXVIII) S-2,3-dihydro-5-methoxy-2-oxo-1,3,4-thiadiazol-3-ylmethyl O,O-dimethyl phosphorodithioate (methidathion);
(XXXIX) S-methyl N-(methylcarbamoyloxy)thioacetimidate (methomyl);
(XL) methyl 3-(dimethoxyphosphinoyloxy)but-2-enoate (mevinphos);
(XLI) dimethyl (E)-1-Methyl-2-(methylcarbamoyl)vinyl phosphate (monocrotophos);
(XLII) O,O-diethyl O-4-nitrophenyl phosphorothioate (parathion);
(XLIII) O,O-dimethyl O-4-nitrophenyl phosphorothioate (parathion-methyl);
(XLIV) S-6-chloro-2,3-dihydro-2-oxo-1,3-benzoxazol-3-ylmethyl O,O-diethyl phosphorodithioate (phosalone);
(XLV) 2-chloro-2-diethylcarbamoyl-1-methylvinyl dimethyl phosphate (phosphamidon);
(XLVI) 2-dimethylamino-5,6-dimethylpyrimidin-4-yl dimethylcarbamate (pirimicarb);
(XLVII) O-4-bromo-2-chlorophenyl O-ethyl S-propyl phosphorothioate (profenofos);
(XLVIII) 2-isopropoxyphenyl methylcarbamate (propoxur);
(XLIX) 1-(3,5-dichloro-2,4-difluorophenyl)-3-(2,6-difluorobenzoyl)urea (teflubenzuron);
(L) S-tert-butylthiomethyl O,O-dimethyl phosphorodithioate (terbufos);
(LI) ethyl (3-tert-butyl-1-dimethylcarbamoyl-1H-1,2,4-triazol-5-yl-thio)acetate, (triazamate);
(LII) a substance obtainable from Bacillus thuringiensis strain GC91 (NCTC11821);
(LIII) abamectin,
(LIV) isopropyl 4,4'-dibromobenzilate (bromopropylate);
(LV) 2-sec-butylphenyl methylcarbamate (fenobucarb);
(LVI) N-tert-butyl-N'-(4-ethylbenzoyl)-3,5-dimethylbenzohydrazide (tebufenozide);
(LVII) (±)-5-amino-1-(2,6-dichloro-α,α,α-frifIuoro-p-tolyl)-4-trifluoromethyl-sulfinylpyrazole-3-carbonitrile (fipronil);
(LVIII) a-cyano-4-fluoro-3-phenoxybenzyl-3-(2,2-dichlorovinyl)-2,2-dimethylcyclopropanecarboxylate (beta-cyfluthrin);
(LIX) (4-ethoxyphenyl)[3-(4-fluoro-3-phenoxyphenyl)propyl](dimethyl)silane (silafluofen);
(LX) a mixture of 50 to 80 % of (2RS,4SR)-4-(2-ethyl-1,3-dioxolan-4-ylmethoxy)phenyl phenyl ether and 50 to 20 % of (2RS,4RS)-4-(2-ethyl-1 ,3-dioxolan-4-ylmethoxy)phenyl phenyl ether (diofenolan);
(LXI) tert-butyl (E)-α-(1,3-dimethyl-5-phenoxypyrazol-4-yl-methyleneamino-oxy)-p-toluate (fenpyroximate);
(LXII) 2-tert-butyl-5-(4-tert-butylbenzylthio)-4-chloropyddazin-3(2H)-one (pyridaben);
(LXIII) 4-tert-butylphenethyl quinazolin-4-yl ether (fenazaquin);
(LXIV) 4-phenoxyphenyl (RS)-2-(pyridyloxy)propyl ether (pyriproxyfen);
(LXV) 5-chloro-N-{2-[4-(2-ethoxyethyl)-2,3-dimethylphenoxy]ethyl}-6-ethylpyrimidin-4-amine (pyrimidifen);
(LXVI) (E)-N-(6-chloro-3-pyridylmethyl)-N-ethyl-N'-methyl-2-nitrovinylideneamine (nitenpyram);
(LXVII) (E)-N¹-[(6-chloro-3-pyridyl)methyl]-N²-cyano-N¹-methylacetamidine (NI-25, acetamiprid);
(LXVIII) butyl 2,3-dihydro-2,2-dimethylbenzofuran-7-yl N,N'-dimethyl-N,N'-dithiocarbamate (furathiocarb);
(LXIX) avermectin B₁ (abamectin); and at least one auxiliary.

2. A composition accorting to claim 1, which comprises the compound of the formula (A) in free form.

3. A composition according to claim 2, which comprises, in addition to the compound of the formula (A), a further pesticidally active compound.

4. A composition according to claim 2, which comprises the compound of the formula (A) (diafenthiuron) and the compound (I) (ethyl 2-(4-phenoxyphenoxy)ethylcarbamate, fenoxycarb).

5. A composition according to claim 4, which comprises four parts by weight of diafenthiuron and one part by weight of fenoxycarb.

6. A method of controlling pests, which comprises applying a composition as described in claim 1 to the pests or their environment.

7. A method according to claim 6 of controlling insects of the order Homoptera.

8. A method according to claim 6 of controlling insects of the order Lepidoptera.

9. A method according to claim 6 of controlling insects of the order Thysanoptera.

10. A method according to claim 6 of controlling representatives of the order Acarina.

11. A method according to claim 6 of controlling insects of the order Coleoptera.

12. A method according to claim 6 for the protection of plant propagation material, which comprises treating the propagation material or the site of application of the propagation material.

13. A process for the preparation of a composition - comprising at least one auxiliary - as described in claim 1, which comprises intimately mixing the active ingredients with the auxiliary (auxiliaries).

14. Plant propagation material treated in accordance with the process described in claim 13.

15. The use of a composition as described in claim 1 in a method as described in claim 6.

16. The use of a compound of the formula (A), in free form or in agrochemically useful salt form, for the preparation of a composition as described in claim 1.
